# EUROPÄISCHE PATENTSCHRIFT

(11) **EP 2 818 766 B1**
(45) Veröffentlichungstag und Bekanntmachung des Hinweises auf die Patenterteilung: **28.06.2017**
(21) Anmeldenummer: 14181495.4
(22) Anmeldetag: 12.02.2013
(51) Int. Cl.: F16H 63/18, F16H 63/32

(54) **Aktuatoranordnung für einen Kraftfahrzeugantriebsstrang**
Actuator arrangement for a motor vehicle drive train
Agencement d'actionneur pour une transmission de véhicule automobile

(30) Priorität: 14.02.2012 DE 102012003415
(43) Veröffentlichungstag der Anmeldung: 31.12.2014
(62) Teilanmeldung aus: 13704092.9
(73) Patentinhaber: GETRAG B.V. & Co. KG, 74199 Untergruppenbach (DE)
(72) Erfinder: Bünder, Carsten, 70563 Stuttgart (DE); Rothvoss, Stefan, 71711 Steinheim (DE)
(74) Vertreter: Witte, Weller & Partner Patentanwälte mbB

(56) Entgegenhaltungen:
- WO-A1-2004/097265
- DE-A1-102008 059 267
- US-A1- 2011 100 144
- US-A1- 2011 303 049

## Beschreibung

Die vorliegende Erfindung betrifft eine Aktuatoranordnung für einen Kraftfahrzeugantriebsstrang, der wenigstens eine Reibkupplung zur Übertragung von Antriebsmoment, insbesondere in Form einer Anfahrkupplung, sowie ein Getriebe mit wenigstens zwei Gangstufen aufweist, die mittels einer Schaltkupplungsanordnung ein-und auslegbar sind, mit einem Hydraulikkreis, der eine Pumpe aufweist, die mittels eines Elektromotors antreibbar ist, und der einen Kupplungs-Hydraulikzylinder aufweist, mittels dessen die Reibkupplung betätigbar ist, und mit einer Schalt-Aktuatoreinrichtung zum Betätigen der Schaltkupplungsanordnung, wobei die Schalt-Aktuatoreinrichtung eine Schaltwalze aufweist, die mit dem Elektromotor über eine Schaltwalzen-Koppeleinrichtung derart gekoppelt oder koppelbar ist, dass die Schaltwalze mittels des Elektromotors in Rotation versetzbar ist, um die Schaltkupplungsanordnung zu betätigen.

Eine solche Aktuatoranordnung ist aus dem Dokument US 2011/0303049 A1 bekannt.

Auf dem Gebiet der Kraftfahrzeugantriebsstränge sind automatisierte Getriebe wie automatisierte Schaltgetriebe, Doppelkupplungsgetriebe, Wandlerautomatgetriebe etc. bekannt. Automatisierte Getriebe werden sowohl hinsichtlich der Kupplungsbetätigung als auch hinsichtlich der Schaltbetätigung mit geeigneten Aktuatoren ausgerüstet, um diese Vorgänge automatisiert ablaufen zu lassen.

Zur Betätigung der Reibkupplung ist es dabei bekannt und bevorzugt, hydraulische Aktuatoren zu verwenden, bei denen die Reibkupplung mittels eines Kupplungs-Hydraulikzylinders betätigt wird. Dies ermöglicht eine feinfühlige und schnelle Regelung des über die Reibkupplung übertragenen Drehmomentes, was insbesondere bei Doppelkupplungsgetrieben von besonderer Bedeutung ist. Denn hier werden zwei Reibkupplungen zur Drehmomentübergabe von einem Leistungsübertragungszweig auf den anderen Leistungsübertragungszweig überschneidend betätigt.

Als Schalt-Aktuatoreinrichtung ist es ebenfalls bekannt, hydraulische Zylinder zur Betätigung einzelner Schaltkupplungspakete wie Synchronisierungen zu verwenden. Der Vorteil liegt hier darin, dass für die Reibkupplungsbetätigung und für die Schaltkupplungsbetätigung eine einheitliche Fluidquelle verwendbar ist.

Es ist jedoch auch bekannt, die Schaltkupplungsanordnung elektrisch zu betätigen, beispielsweise durch elektromagnetische Aktuatoren oder durch Elektromotoren. Im letzteren Fall ist es bekannt, zur Betätigung von Schaltkupplungen sogenannte Schaltwalzen zu verwenden, die mittels eines Elektromotors angetrieben werden.

Es ist ferner auch bekannt, Schaltkupplungsanordnungen mit Schaltwellen vorzusehen, die mittels eines Hydraulikzylinders in Schaltrichtung bewegt werden, und die mittels eines Elektromotors in Wählrichtung bewegt werden.

Zur Druckregelung eines Hydraulikfluides ist es bekannt, über eine Pumpe einen Leitungsdruck zu erzeugen, der mittels eines Druckregelventils konstant gehalten wird. Mittels weiterer Druckregelventile werden dann die Drücke einzelner Hydraulikzylinder eingeregelt. Dabei ist es bekannt, die Pumpe nach der Art eines Nebenantriebes an den Verbrennungsmotor anzukoppeln.

Es ist jedoch auch bekannt, den Druckanschluss einer Pumpe direkt mit einem Hydraulikzylinder zu verbinden und die Pumpe mittels eines Elektromotors anzutreiben. In diesem Fall ist es möglich, den Druck in dem Hydraulikzylinder durch Einstellen der Drehzahl des Elektromotors zu regeln.

Vor dem obigen Hintergrund ist es eine Aufgabe der Erfindung, eine verbesserte Aktuatoranordnung für einen Kraftfahrzeugantriebsstrang anzugeben, die insbesondere kostengünstig ist und mit wenigen Bauelementen realisierbar ist.

Diese Aufgabe wird bei der eingangs genannten Aktuatoranordnung dadurch gelöst, dass der Kraftfahrzeugantriebsstrang ein Doppelkupplungsgetriebe mit einer ersten Reibkupplung und mit einer zweiten Reibkupplung aufweist, wobei der Hydraulikkreis eine von einem ersten Elektromotor antreibbare erste Pumpe für die erste Reibkupplung und eine von einem zweiten Elektromotor antreibbare zweite Pumpe für die zweite Reibkupplung aufweist, wobei die Schalt-Aktuatoreinrichtung eine erste Schaltwalze und eine zweite Schaltwalze aufweist, wobei die erste Schaltwalze über eine erste Schaltwalzen-Koppeleinrichtung mit dem ersten Elektromotor koppelbar ist und wobei die zweite Schaltwalze über eine zweite Schaltwalzen-Koppeleinrichtung mit dem zweiten Elektromotor koppelbar ist, wobei der Hydraulikkreis einen Kreuzschaltungsabschnitt aufweist, der zumindest einen Anschluss der zweiten Pumpe mit einem hydraulischen ersten Koppeleinrichtungsaktuator zum Betätigen der ersten Schaltwalzen-Koppeleinrichtung verbinden kann, und/oder der zumindest einen Anschluss der ersten Pumpe mit einem hydraulischen zweiten Koppeleinrichtungsaktuator zum Betätigen der zweiten Schaltwalzen-Koppeleinrichtung verbinden kann.

Die vorliegende Erfindung geht also grundsätzlich davon aus, dass eine Reibkupplung eines automatisierten Kraftfahrzeugantriebsstranges hydraulisch betätigt wird, wobei der zugeordnete Hydraulikkreis eine elektromotorisch angetriebene Pumpe aufweist. Über die Schaltwalzen-Koppeleinrichtung ist es möglich, den selben Elektromotor auch dazu zu verwenden, eine Schaltwalze zu drehen, die zur Betätigung der Schaltkupplungsanordnung dient.

Bei der Verwendung einer Schaltwalze zur Betätigung der Schaltkupplungsanordnung ist es vorteilhaft, dass nur ein einzelner Antrieb zum Ein- und Auslegen von Gangstufen oder mehreren Schaltkupplungen erforderlich ist. Mit anderen Worten kann eine Schaltwalze auch mehrere Schaltkupplungspakete (insbesondere Synchronisierungen) betätigen, zu welchem Zweck die Schaltwalze vorzugsweise mehrere Schaltwalzennuten aufweist. Die Schaltwalze kann dabei beispielsweise bei einem automatisierten Schaltgetriebe zur Betätigung sämtlicher Schaltkupplungspakete des Getriebes verwendet werden. Es ist alternativ jedoch auch möglich, mehrere Schaltwalzen vorzusehen, die jeweils eine Teilmenge der Schaltkupplungspakete betätigen. In letzterem Fall ist es möglich, dass die Schaltwalzen-Koppeleinrichtung den Elektromotor alternativ mit unterschiedlichen Schaltwalzen koppelt. Besonders bevorzugt ist es jedoch, wenn jeder Schaltwalze ein eigener Elektromotor zugeordnet ist. Daher ist es auch möglich, dass für eine weitere Schaltwalze ein separater Elektromotor vorgesehen wird, der nicht zum Pumpenantrieb verwendet wird.

Bei Anwendung auf ein automatisiertes Schaltgetriebe, das in der Regel nur eine einzelne Reibkupplung in Form einer Anfahrkupplung aufweist, ist es beispielsweise möglich, den Elektromotor mit einer Pumpe zu verbinden, die einen Leitungsdruck erzeugt, der zur Betätigung der Reibkupplung über einen Druckspeicher abgesichert wird. Alternativ ist es auch möglich, den Elektromotor mit einer Pumpe zu verbinden, deren Druckanschluss direkt mit einem Kupplungs-Hydraulikzylinder verbunden ist. An diesen Elektromotor kann dann über die Schaltwalzen-Koppeleinrichtung eine Schaltwalze oder gegebenenfalls eine Mehrzahl von Schaltwalzen angekoppelt werden. Falls nur eine Schaltwalze ankoppelbar ist, kann eine weitere Schaltwalze gegebenenfalls über einen separaten Elektromotor angesteuert werden.

Besondere Vorteile ergeben sich jedoch bei Kraftfahrzeugantriebssträngen, die ein Doppelkupplungsgetriebe aufweisen. Hier sind zwei Reibkupplungen vorhanden, denen vorzugsweise jeweils eine eigene Pumpe mit einem eigenen Elektromotor zugeordnet ist. Jedem der zwei Elektromotoren kann in diesem Fall über eine Schaltwalzen-Koppeleinrichtung eine Schaltwalze zugeordnet werden. Dabei ist es bevorzugt, wenn eine Schaltwalze die Gangstufen eines Teilgetriebes ein- und auslegt, und die andere Schaltwalze die Gangstufen des anderen Teilgetriebes. In diesem Fall ist es von Vorteil, dass jeweils jene Schaltwalze mittels des zugeordneten Elektromotors betätigbar ist, die der Kupplungsbetätigung des gerade inaktiven Teilgetriebes zugeordnet ist. Alternativ ist es jedoch auch denkbar, die Gangstufen auf andere Art und Weise auf zwei (oder auch mehr) Schaltwalzen zu verteilen.

Insgesamt kann mit der vorliegenden Erfindung eine Mehrfachnutzung von Elektromotoren erzielt werden, da jeweils ein Elektromotor sowohl zum Pumpenantrieb als auch zum Schaltwalzenantrieb einsetzbar ist. Demzufolge kann die Aktuatoranordnung mit wenigen Komponenten, insbesondere wenigen Elektromotoren und wenigen Elektropumpen, realisiert werden.

Der Elektromotor kann dabei günstig positioniert werden, so dass sich auch Packagevorteile ergeben können. Ferner ergeben sich insgesamt auch Gewichts-und Kostenvorteile aufgrund der geringen Anzahl der verwendeten Komponenten.

Erfindungsgemäß ist insbesondere vorteilhaft, dass einer der zwei Elektromotoren beispielsweise dazu verwendet werden kann, die zugeordnete Pumpe so anzutreiben, dass die zugeordnete Reibkupplung geschlossen ist, um Leistung über den zugeordneten Leistungsübertragungsstrang des Doppelkupplungsgetriebes zu übertragen. In diesem Fall kann der andere Elektromotor über die zugeordnete Schaltwalzen-Koppeleinrichtung mit der zugeordneten Schaltwalze verbunden werden, um beispielsweise in einem inaktiven Teilgetriebe des Doppelkupplungsgetriebes Gangstufen ein- und auszulegen.

Dabei kann beispielsweise der über die Pumpe, die dem aktiven Leistungsübertragungszweig des Doppelkupplungsgetriebes zugeordnet ist, erzeugte Druck zur Betätigung des hydraulischen Koppeleinrichtungsaktuators verwendet werden, der dem inaktiven Leistungsübertragungspfad zugeordnet ist.

Im einfachsten Fall kann dabei ein Druckanschluss einer Pumpe mit dem hydraulischen Koppeleinrichtungsaktuator verbunden sein, der dem anderen Leistungsübertragungspfad zugeordnet ist.

Dabei ist es bevorzugt, wenn der Koppeleinrichtungsaktuator eine Feder aufweist, mittels der die zugeordnete Schaltwalzen-Koppeleinrichtung in einen geöffneten Zustand gedrückt wird. Die Federkonstante dieser Feder kann dabei vorzugsweise so ausgelegt sein, dass sie nur bei einer großen Kraft des Koppeleinrichtungsaktuators ausgelenkt wird. Diese Kraft kann einem Druck am Druckanschluss der Pumpe des anderen (aktiven) Leistungsübertragungspfades entsprechen, der so hoch ist, dass die Reibkupplung überdrückt wird, also entsprechend einem Druck, der über den Schließdruck der Reibkupplung hinausgeht. Auf diese Weise kann gewährleistet werden, dass der Koppeleinrichtungsaktuator nur dann betätigt wird, wenn ein gezielt hoher Druck eingestellt wird, der beispielsweise durch eine elektrische Steuereinrichtung vorgegeben werden kann.

Die Aufgabe wird somit vollkommen gelöst.

Gemäß einer besonders bevorzugten Ausführungsform sind die Elektromotoren jeweils starr mit einer Antriebswelle der jeweiligen Pumpe gekoppelt.

Durch diese Maßnahme kann der Aufbau der Aktuatoranordnung insgesamt vereinfacht werden. Die Schaltwalzen-Koppeleinrichtung kann an beliebiger Stelle mit der Ausgangswelle des jeweiligen Elektromotors bzw. mit der Antriebswelle der Pumpe gekoppelt sein.

Dabei ist es von besonderem Vorteil, wenn der Hydraulikkreis für jede Pumpe ein Druckabbauventil aufweist, das in einer Ventilstellung wenigstens einen Druckanschluss der jeweiligen Pumpe mit einem Niederdruckabschnitt verbindet.

Das Druckabbauventil kann folglich dazu verwendet werden, den Druck an einem Druckanschluss der Pumpe mit dem Niederdruckanschluss zu verbinden, um auf diese Weise eine versehentliche Betätigung der Reibkupplung während einer Betätigung der Schaltwalze zu vermeiden. Mit anderen Worten kann die Pumpe zum Zwecke der Betätigung der Reibkupplung betätigt werden, wenn die Schaltwalzen-Koppeleinrichtung die Schaltwalze von dem Elektromotor entkoppelt hat. Umgekehrt kann bei geschlossener Schaltwalzen-Koppeleinrichtung der Elektromotor die Schaltwalze antreiben, ohne gleichzeitig die Reibkupplung zu betätigen oder auf sonstige Weise einen Arbeitsdruck auf der Seite des Druckanschlusses der Pumpe zu erzeugen.

Besonders bevorzugt ist es dabei, wenn das Druckabbauventil in der einen Ventilstellung einen Druckanschluss direkt mit einem Niederdruckabschnitt verbindet, wobei der Niederdruckabschnitt ein Tank sein kann. In einer zweiten Ventilstellung kann das Druckabbauventil hingegen geschlossen sein, so dass der Niederdruckabschnitt von einem Hochdruckabschnitt getrennt ist. Das Druckabbauventil kann vorzugsweise als Wegeventil ausgebildet sein, vorzugsweise als 2/2-Wegeventil. Das Wegeventil kann elektrisch oder hydraulisch betätigbar sein.

Gemäß einer weiteren bevorzugten Ausführungsform sind die Elektromotoren über eine Pumpen-Koppeleinrichtung mit einer Antriebswelle der jeweiligen Pumpe gekoppelt.

Bei dieser Ausführungsform kann eine Ausgangswelle des Elektromotors folglich über die Pumpen-Koppeleinrichtung mit der Antriebswelle der Pumpe gekoppelt bzw. davon entkoppelt werden, und ferner kann die Ausgangswelle des Elektromotors vorzugsweise über die Schaltwalzen-Koppeleinrichtung mit der Schaltwalze gekoppelt oder hiervon entkoppelt werden.

Bei dieser Ausführungsform ist es möglich, die Schaltwalzen-Koppeleinrichtung und die Pumpen-Koppeleinrichtung so auszubilden, dass diese nur alternativ mit der Ausgangswelle des Elektromotors gekoppelt sind. In diesem Fall ist es gegebenenfalls nicht notwendig, in dem Hydraulikkreis ein Druckabbauventil vorzusehen, das in einer Ventilstellung wenigstens einen Druckanschluss der Pumpe mit einem Niederdruckabschnitt verbindet.

Dabei ist es von besonderem Vorteil, wenn die Schaltwalzen-Koppeleinrichtung und die Pumpen-Koppeleinrichtung jeweils in ein Koppeleinrichtungspaket integriert sind.

Ein derartiges Koppeleinrichtungspaket kann ähnlich aufgebaut sein wie ein Schaltkupplungspaket eines Schaltgetriebes, kann also beispielsweise eine Schaltmuffe aufweisen, die mit einem Kupplungskörper der Schaltwalzen-Koppeleinrichtung oder mit einem Kupplungskörper der Pumpen-Koppeleinrichtung verbindbar ist. Das Koppeleinrichtungspaket kann dabei nach der Art von zwei Schaltkupplungen ausgebildet sein, die als synchronisierte Schaltkupplungen ausgebildet sind. Bevorzugt sind diese Kupplungen jedoch jeweils als nicht synchronisierte Kupplungen ausgebildet, insbesondere als Klauenkupplungen.

Vorzugsweise ist vorgesehen, dass die Schaltwalzen-Koppeleinrichtung und/oder eine Pumpen-Koppeleinrichtung jeweils mittels eines hydraulischen Koppeleinrichtungsaktuators betätigbar ist.

Hierbei kann gegebenenfalls auf Komponenten in dem ohnehin vorhandenen Hydraulikkreis zurückgegriffen werden, so dass sich eine Einsparung von Komponenten ergeben kann.

Generell ist es zwar möglich, die erfindungsgemäße Aktuatoranordnung beispielsweise bei automatisierten Schaltgetrieben oder auch bei Wandlerautomatgetrieben zu verwenden. Ferner ist es möglich, die Aktuatoranordnung in Hybrid-Antriebssträngen zu verwenden, oder auch in rein elektrischen Antrieben, bei denen eine Reibkupplung sowie ein Getriebe mit wenigstens zwei Gangstufen vorhanden sind.

Ferner ist es möglich, dass der jeweilige hydraulische Koppeleinrichtungsaktuator mit einem Sauganschluss einer jeweiligen Pumpe verbunden ist (vorzugsweise mit dem Sauganschluss der Pumpe des anderen Leistungsübertragungspfades), derart, dass der Koppeleinrichtungsaktuator bei Drehrichtungsumkehr der Pumpe mit Fluid versorgt wird.

Bei dieser Variante kann bei einem Doppelkupplungsgetriebe der hydraulische Koppeleinrichtungsaktuator, der dem inaktiven Leistungsübertragungspfad zugeordnet ist, auch dann mittels der Pumpe des aktiven Leistungsübertragungspfades betätigt werden, wenn die Reibkupplung des aktiven Leistungsübertragungspfades nicht geschlossen ist.

Mit anderen Worten kann bei dieser Ausführungsform erreicht werden, dass Gangstufen auch dann eingelegt werden können, wenn keiner der zwei Leistungsübertragungspfade aktiv ist, also beispielsweise in einer Leerlaufstellung des Doppelkupplungsgetriebes.

Insgesamt ist es ferner bevorzugt, wenn die Schaltwalzen-Koppeleinrichtung wenigstens eine Übersetzungsstufe aufweist.

Hierdurch kann zum einen der Elektromotor räumlich getrennt von der zugeordneten Schaltwalze angeordnet werden. Ferner kann der Elektromotor über eine geeignete Übersetzung mit der Schaltwalze gekoppelt werden.

Die Schaltwalzen-Koppeleinrichtung ist vorzugsweise konzentrisch zu einer Ausgangswelle des Elektromotors und/oder zu einer Antriebswelle der zugeordneten Pumpe ausgerichtet.

Alternativ ist es jedoch auch möglich, dass die Schaltwalzen-Koppeleinrichtung in die Schaltwalze integriert ist.

In entsprechender Weise ist es auch möglich, dass der elektrische Motor koaxial zu einer Antriebswelle der Pumpe angeordnet ist. Alternativ ist es auch möglich, dass der Elektromotor koaxial zu der zugeordneten Schaltwalze angeordnet ist und über eine Übersetzungsstufe mit einer Antriebswelle der Pumpe verbunden ist. Die Pumpe des Hydraulikkreises kann dabei mittels des Elektromotors so angetrieben werden, dass sie einen Leitungsdruck erzeugt, aus dem dann durch Druckregelventile ein geeigneter Druck zur Betätigung der Reibkupplung abgeleitet bzw. geregelt wird.

Von besonderem Vorzug ist es jedoch, wenn die Pumpen jeweils einen Druckanschluss aufweisen, der direkt mit dem jeweiligen Kupplungs-Hydraulikzylinder verbunden ist.

In diesem Fall wird der Druck in dem Kupplungs-Hydraulikzylinder eingestellt durch einen Volumenstrom der Pumpe, der wiederum über die Drehzahl des Elektromotors eingestellt wird.

Bei dieser Ausführungsform ist es vorteilhaft, dass teure Proportionalventile zur Betätigung der Reibkupplung nicht notwendig sind. Dies hat nicht nur Kostengründe, sondern es vereinfacht auch die Montage, da die übrigen Komponenten des Hydraulikkreises ebenfalls vorzugsweise keine Proportionalventile erfordern, an deren Montage generell erhöhte Anforderungen hinsichtlich der Sauberkeit gestellt werden.

Ferner wird die obige Aufgabe gelöst durch einen Kraftfahrzeugantriebsstrang mit einer erfindungsgemäßen Aktuatoranordnung, wobei der Kraftfahrzeugantriebsstrang ein Doppelkupplungsgetriebe der oben beschriebenen Art aufweist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer ersten Ausführungsform eines Kraftfahrzeugantriebsstranges mit einer ersten Ausführungsform einer erfindungsgemäßen Aktuatoranordnung;
- Fig. 2: eine schematische Ansicht einer weiteren Ausführungsform einer erfindungsgemäßen Aktuatoranordnung;
- Fig. 3: eine schematische Ansicht einer weiteren Ausführungsform einer erfindungsgemäßen Aktuatoranordnung;
- Fig. 4: eine schematische Ansicht einer weiteren Ausführungsform einer erfindungsgemäßen Aktuatoranordnung; und
- Fig. 5: eine schematische Darstellung einer Schaltwalze mit einer integrierten Schaltwalzen-Koppeleinrichtung.

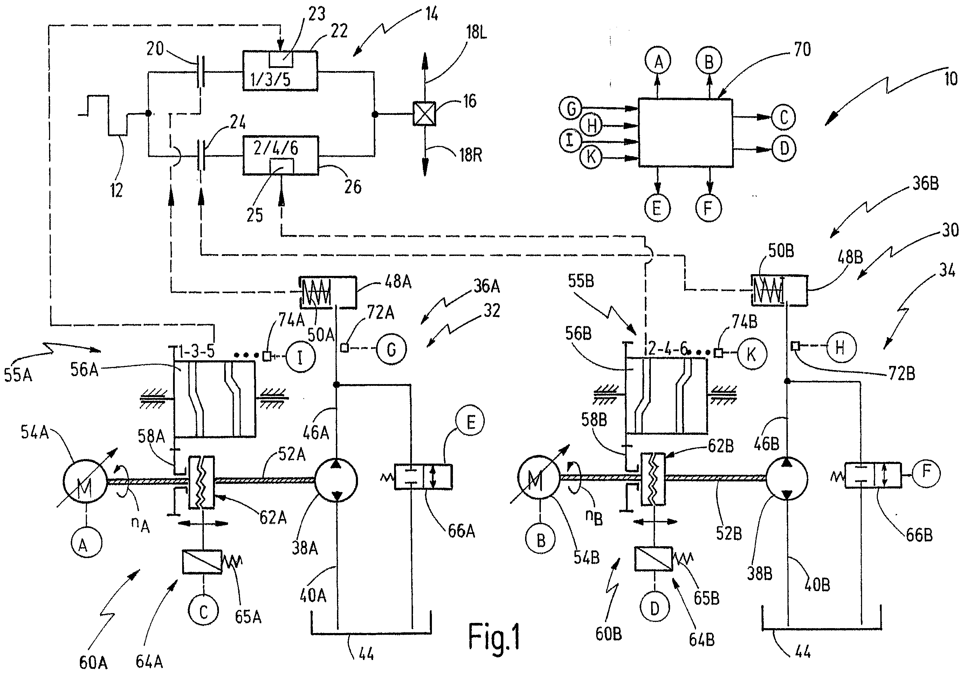

In Fig. 1 ist in schematischer Form ein Kraftfahrzeugantriebsstrang dargestellt und generell mit 10 bezeichnet.

Der Antriebsstrang 10 weist einen Antriebsmotor 12 auf, der beispielsweise als Verbrennungsmotor ausgebildet sein kann. Ferner weist der Kraftfahrzeugantriebsstrang 10 ein Doppelkupplungsgetriebe 14 auf, dessen Eingang mit dem Antriebsmotor 12 verbunden ist und dessen Ausgang mit einem Differential 16 verbunden ist. Das Differential 16 verteilt Antriebsleistung auf zwei Antriebswellen 18L, 18R des Kraftfahrzeugs.

Das Doppelkupplungsgetriebe 14 weist zwei parallele Leistungsübertragungsstränge auf. Der erste Leistungsübertragungsstrang beinhaltet eine erste Reibkupplung 20 und ein erstes Teilgetriebe 22. Das erste Teilgetriebe 22 dient zum Einrichten von ungeraden Vorwärtsgangstufen 1, 3, 5, ... und beinhaltet eine Schaltkupplungsanordnung 23, mittels der diese Gangstufen ein- und auslegbar sind. Der zweite Leistungsübertragungsstrang beinhaltet eine zweite Reibkupplung 24 und ein zweites Teilgetriebe 26, das geraden Gangstufen 2, 4, 6, ... zugeordnet ist. Die Gangstufen des zweiten Teilgetriebes 26 lassen sich mittels einer Schaltkupplungsanordnung 25 ein- und auslegen. Die Schaltkupplungsanordnungen 23, 25 können Synchronisierungseinrichtungen aufweisen, die beispielsweise durch Schaltmuffen betätigbar sind. Die erste Reibkupplung 20 und die zweite Reibkupplung 24 können jeweils als nasslaufende Lamellenkupplungen ausgebildet sein, können jedoch auch als trockene Reibkupplungen ausgebildet sein.

Zum automatisierten Betätigen der Reibkupplungen 20, 24 und der Schaltkupplungsanordnungen 23, 25 ist eine Aktuatoranordnung 30 vorgesehen. Die Aktuatoranordnung 30 beinhaltet einen ersten Aktuatorabschnitt 32, der dem ersten Leistungsübertragungsstrang zugeordnet ist, und einen zweiten Aktuatorabschnitt 34, der dem zweiten Leistungsübertragungsstrang zugeordnet ist.

Die zwei Aktuatorabschnitte 32, 34 sind im Wesentlichen identisch aufgebaut, so dass im Folgenden lediglich der erste Aktuatorabschnitt 32 beschrieben wird. Dessen Elemente sind mit dem Suffix "A" versehen, wohingegen die entsprechenden Elemente des zweiten Aktuatorabschnittes 34 mit dem Suffix "B" versehen sind.

Der Hydraulikkreis 36A weist eine Pumpe 38A auf. Ein Sauganschluss 40A der Pumpe 38A ist mit einem Niederdruckabschnitt in Form eines Tanks 44 verbunden.

Ein Druckanschluss 46A ist direkt mit einem Kupplungs-Hydraulikzylinder 48A verbunden. Der Kupplungs-Hydraulikzylinder 48A dient zum Betätigen der ersten Reibkupplung 20 und weist eine Feder 50A auf, mittels der der Kupplungs-Hydraulikzylinder 48A in eine Position gebracht wird, bei der die erste Reibkupplung 20 geöffnet ist.

Die Pumpe 38A weist eine Antriebswelle 52A auf, die starr mit einer nicht näher bezeichneten Ausgangswelle eines Elektromotors 54A verbunden ist. Der Elektromotor 54A ist hinsichtlich seiner Position und/oder seiner Drehzahl regelbar ausgebildet und stellt an seiner Motorausgangswelle eine Drehzahl nA bereit.

Zum Schließen der ersten Reibkupplung 20 wird der Elektromotor 54A in Drehung versetzt, derart, dass die Pumpe 38A über den Sauganschluss 40A einen Volumenstrom aus dem Niederdruckabschnitt 44 ansaugt und an dem Druckanschluss 46A bereitstellt. Hierdurch erhöht sich der Druck in dem Kupplungs-Hydraulikzylinder 48, so dass dieser gegen die Kraft der Feder 50A ausgelenkt wird, um die Reibkupplung 20 zu schließen. Durch Einstellen der Drehzahl nA kann das Maß des von dem Kupplungs-Hydraulikzylinder 48A ausgeübten Druckes auf die erste Reibkupplung 20 und/oder das Maß des Kupplungsweges eingestellt, insbesondere geregelt werden.

Zum Öffnen der ersten Reibkupplung 20 wird entweder die Drehzahl nA verringert oder sogar in ihrer Richtung umgekehrt, so dass der Kupplungs-Hydraulikzylinder 48A leergesaugt wird. Es versteht sich, dass hierzu gegebenenfalls der Druckanschluss 46A über ein Ventil mit dem Niederdruckabschnitt 44 zu verbinden ist, auf das nachstehend noch eingegangen werden kann.

Die Betätigung der zweiten Reibkupplung 24 erfolgt in entsprechender Weise über den zweiten Aktuatorabschnitt 34.

Zur Betätigung der Schaltkupplungsanordnung 23 des ersten Teilgetriebes 22 beinhaltet der erste Aktuatorabschnitt 32 eine Schalt-Aktuatoreinrichtung 55A. Die Schalt-Aktuatoreinrichtung 55A weist eine Schaltwalze 56A auf. Die Schaltwalze 56A kann eine oder mehrere Steuernuten beinhalten (in Fig. 1 sind in vorteilhafter Weise zwei Steuernuten zum Betätigen von zwei Schaltkupplungspaketen, also vier Gangstufen, dargestellt).

Jede der Steuernuten ist vorzugsweise mit einer Schaltmuffe eines Schaltkupplungspaketes der Schaltkupplungsanordnung 23 gekoppelt.

Die Schaltwalze 56 ist um eine nicht näher bezeichnete Achse drehbar gelagert und über eine Übersetzungsstufe 58A mit einer Schaltwalzen-Koppeleinrichtung 60 gekoppelt. Die Schaltwalzen-Koppeleinrichtung 60 weist ein drehfest mit der Ausgangswelle des Elektromotors 54A verbundenes Glied und ein frei in Bezug auf die Antriebswelle des Elektromotors 54A drehbar gelagertes Glied auf. Die zwei Glieder der Schaltwalzen-Koppeleinrichtung 60A sind entweder getrennt; in diesem Fall ist die Schaltwalze 56A von der Ausgangswelle des Elektromotors 54A entkoppelt. Im geschlossenen Zustand der Schaltwalzen-Koppeleinrichtung 60A ist die Ausgangswelle des Elektromotors 54A über die Übersetzungsstufe 58A mit der Schaltwalze 56A gekoppelt, so dass die Schaltwalze 56A durch den Elektromotor 54A in Drehung versetzt werden kann, um die Schaltkupplungsanordnung 23 zu betätigen.

Im vorliegenden Fall ist die Schaltwalzen-Koppeleinrichtung 60A durch eine Stirnzahnkupplung 62A gebildet. Die Schaltwalzen-Koppeleinrichtung 60A kann jedoch auch durch eine Klauenkupplung, durch eine Magnetpulverkupplung etc. gebildet sein.

Zum Betätigen der Schaltwalzen-Koppeleinrichtung 60A ist im vorliegenden Fall ein elektrischer Koppeleinrichtungsaktuator 64A vorgesehen. Dieser kann beispielsweise einen Elektromagneten beinhalten, mittels dessen die Schaltwalzen-Koppeleinrichtung 60A geöffnet oder geschlossen wird. Vorzugsweise beinhaltet der elektrische Koppeleinrichtungsaktuator 64A eine Vorspannfeder 65A, mittels der die Schaltwalzen-Koppeleinrichtung 60A in eine geöffnete Position vorgespannt wird.

Im vorliegenden Fall ist die Ausgangswelle des Elektromotors 54A starr mit der Antriebswelle 52A der Pumpe 38A verbunden. Wenn daher die Schaltwalzen-Koppeleinrichtung 60A geschlossen ist, um die Schaltwalze 56A in Drehung zu versetzen, wird auch die Pumpe 38A angetrieben. Um zu vermeiden, dass hierdurch versehentlich die zugeordnete erste Reibkupplung 20 betätigt wird, ist in dem Hydraulikkreis 36A ein Druckabbauventil 66A vorgesehen. Das Druckabbauventil 66A verbindet den Druckanschluss 46A der Pumpe 38A mit dem Niederdruckabschnitt 44. In der in Fig. 1 gezeigten ersten Stellung ist der Druckanschluss 46A dabei von dem Niederdruckabschnitt 44 getrennt. Über eine elektromagnetische Betätigung lässt sich das Druckabbauventil 66A in eine zweite Ventilstellung bringen, bei der der Druckanschluss 46A mit dem Niederdruckabschnitt 44 verbunden ist.

Das Druckabbauventil 66A wird vorzugsweise dann in diese Stellung gebracht, wenn die Schaltwalzen-Koppeleinrichtung 60A geschlossen wird. Wenn in diesem Fall die Schaltwalze 56A mittels des Elektromotors 54A angetrieben wird, fördert die Pumpe 38A einen Volumenstrom über den Sauganschluss 40A zum Druckanschluss 46A und von da über das Druckabbauventil 66A in den Niederdruckabschnitt 44. Bei entgegengesetzter Drehrichtung der Schaltwalze 56A fördert die Pumpe über den Druckanschluss 56A und über den Sauganschluss 40A zurück in den Niederdruckabschnitt 44. Demzufolge kann eine unbeabsichtigte Betätigung der ersten Reibkupplung 20 während der Schaltwalzenbetätigung verhindert werden. Ferner kann zur Unterstützung einer schnellen Entleerung des Kupplungs-Hydraulikzylinders 48A das Druckabbauventil 66A den Druckanschluss 46A mit dem Niederdruckabschnitt 44 verbinden.

Zur Ansteuerung der Aktuatoranordnung 30 ist eine Steuereinrichtung 70 vorgesehen. Die Steuereinrichtung 70 dient zum einen zur Ansteuerung der Elektromotoren 54A, 54B, wobei gegebenenfalls eine entsprechende Leistungselektronik für beide Motoren insgesamt oder für jeden Elektromotor vorgesehen sein kann. Ferner ist die Steuereinrichtung 70 mit den elektrischen Koppeleinrichtungsaktuatoren 64A, 64B verbunden, um die Schaltwalzen-Koppeleinrichtungen 60A, 60B zu öffnen oder zu schließen. Ferner ist die Steuereinrichtung 70 mit den Druckabbauventilen 66A, 66B verbunden, um diese in die eine oder die andere Ventilstellung zu bringen. Schließlich ist die Steuereinrichtung 70 mit einer Reihe von Sensoren verbunden, vorzugsweise einschließlich von Drucksensoren 72A, 72B, die die jeweiligen Drücke in den Druckanschlüssen 46A, 46B bzw. den Kupplungs-Hydraulikzylindern 48A, 48B messen. Auch ist die Steuereinrichtung 70 vorzugsweise mit Drehwinkelsensoren 74A, 74B verbunden, die den Drehwinkel der Schaltwalzen 56A, 56B erfassen.

Im Fahrbetrieb wird Leistung jeweils über einen der zwei Leistungsübertragungszweige bzw. -stränge übertragen. Dieser Strang ist dann der jeweils aktive Strang. In diesem Fall ist die zugeordnete Reibkupplung geschlossen. Während dieser Phase ist die diesem aktiven Leistungsübertragungszweig zugeordnete Schaltwalzen-Koppeleinrichtung 60 vorzugsweise geöffnet. Wenn beispielsweise Leistung über den ersten Leistungsübertragungsstrang übertragen wird, wird die Pumpe 38A in Rotation versetzt, um einen Volumenstrom zu erzeugen und nachzuführen, der einen entsprechenden Schließdruck in dem Kupplungs-Hydraulikzylinder 48A erzeugt. Die erste Schaltwalzen-Koppeleinrichtung 60A ist geöffnet. Während dieser Phase kann eine Gangstufe in dem Teilgetriebe des inaktiven Zweiges vorgewählt werden, in dem obigen Beispiel also in dem zweiten Teilgetriebe 26. Hierzu wird das Druckabbauventil 66B in die zweite Ventilstellung gebracht, bei der der Druckanschluss 46B mit dem Niederdruckabschnitt 44 verbunden ist. Ferner wird die zweite Schaltwalzen-Koppeleinrichtung 60B geschlossen. Nun kann durch Verdrehen des zweiten Elektromotors 54B in dem inaktiven Teilgetriebe 26 eine Gangstufe vorgewählt werden.

Bei Doppelkupplungsgetrieben erfolgt eine Übergabe von einem Leistungsübertragungszweig auf den anderen Leistungsübertragungszweig durch überschneidende Betätigung der zwei Reibkupplungen. Während dieser Phase sind die Schaltwalzen-Koppeleinrichtungen 60A, 60B vorzugsweise jeweils geöffnet, und die Druckabbauventile 66A, 66B sind vorzugsweise in der ersten Stellung, bei der die jeweiligen Druckanschlüsse von dem Niederdruckabschnitt getrennt sind.

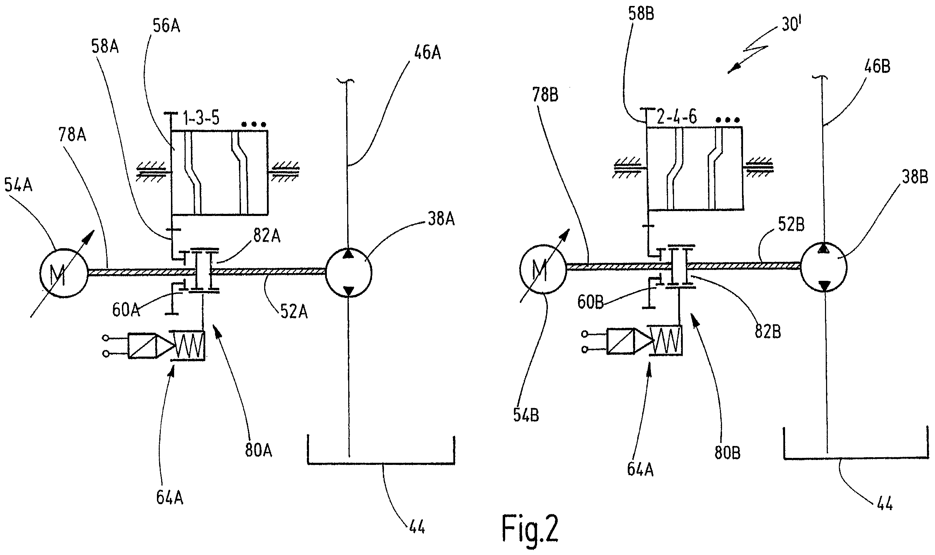

In den nachfolgenden Fig. 2 bis 4 werden alternative Ausführungsformen von Hydraulikkreisen erläutert, die hinsichtlich Aufbau und Funktion generell dem Hydraulikkreis 36 der Fig. 1 entsprechen. Gleiche Elemente sind daher durch gleiche Bezugszeichen gekennzeichnet. Im Folgenden werden im Wesentlichen die Unterschiede erläutert. In Fig. 2 ist eine Aktuatoranordnung 30' gezeigt, bei der eine Ausgangswelle 78A des Elektromotors 54A nicht starr mit der Antriebswelle 52A der Pumpe 38A gekoppelt ist. Vielmehr ist die Ausgangswelle 78A über eine Pumpen-Koppeleinrichtung 82A mit der Antriebswelle 52A koppelbar oder auch hiervon trennbar. Die Pumpen-Koppeleinrichtung 82A kann dabei, wie dargestellt, mit der Schaltwalzen-Koppeleinrichtung 60A in ein Koppeleinrichtungspaket 80A integriert sein. Für den zweiten Aktuatorabschnitt gilt Entsprechendes.

Das Koppeleinrichtungspaket 80A kann dabei so ausgestaltet sein, dass entweder die Schaltwalzen-Koppeleinrichtung 60A oder die Pumpen-Koppeleinrichtung 82A geschlossen ist, derart, dass die Ausgangswelle 78A des Elektromotors 54A mit der Schaltwalze 56A oder mit der Antriebswelle 52A der Pumpe 38A gekoppelt ist. Das Koppeleinrichtungspaket 80A kann dabei nach der Art eines Schaltkupplungspaketes aufgebaut sein, wie es auch in den Teilgetrieben 22, 26 verwendet wird.

Bei dieser Ausführungsform ist es nicht notwendig, den Druckanschluss der Pumpe 38A über ein Druckabbauventil 66A mit dem Niederdruckabschnitt 44 verbinden zu können. Vielmehr kann die Aktuatoranordnung 30' ohne derartige Druckabbauventile 66 realisiert sein.

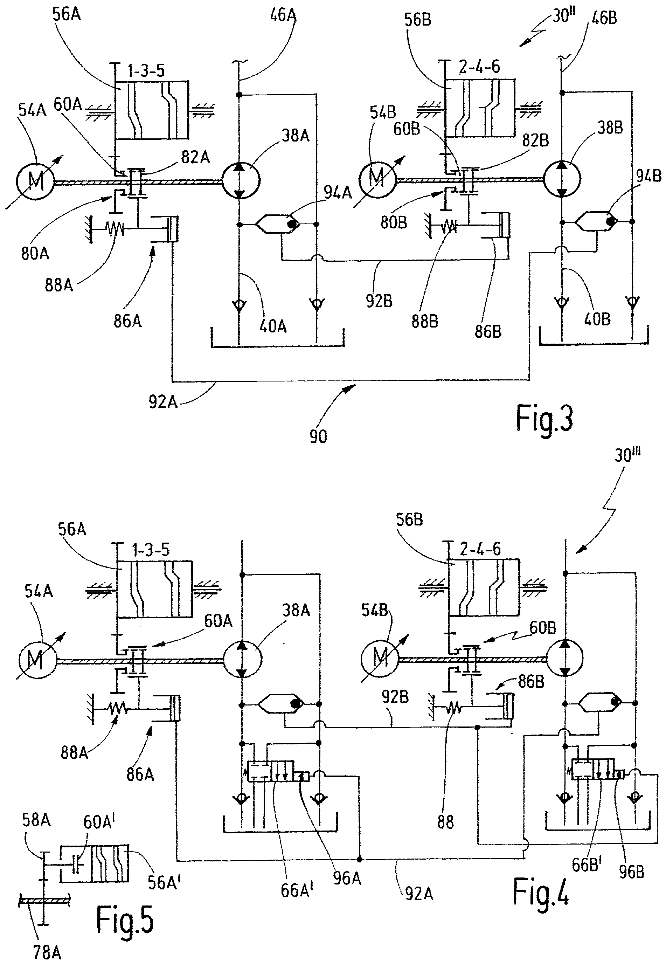

Während die Koppeleinrichtungen 60 bzw. 60, 82 bei den Ausführungsformen der Fig. 1 und 2 vorzugsweise elektromagnetisch betätigt werden, werden in den nachfolgenden Fig. 3 und 4 Ausführungsformen erläutert, bei denen diese Koppeleinrichtungen hydraulisch betätigt werden. Bei diesen Ausführungsformen sind komplexe Elektromagnetaktuatoren nicht erforderlich. Dabei entspricht die generelle Funktionsweise der in Fig. 3 gezeigten Aktuatoranordnung 30" jener der Aktuatoranordnung 30' der Fig. 2, und die Funktionsweise der Aktuatoranordnung 30'" der Fig. 4 entspricht jener der Aktuatoranordnung 30 der Fig. 1.

Bei den Ausführungsformen 30", 30'" der Fig. 3 und 4 sind anstelle der elektrischen Koppeleinrichtungsaktuatoren 64A, 64B hydraulische Koppeleinrichtungsaktuatoren 86A, 86B vorgesehen. Diese weisen jeweils eine Feder 88A auf, mittels der die hydraulischen Koppeleinrichtungsaktuatoren 86A, 86B in eine Stellung vorgespannt sind. Bei der Ausführungsform der Fig. 3 ist ein Koppeleinrichtungspaket 80A entsprechend jenem der Fig. 2 vorgesehen, und die Feder 88A spannt den zugeordneten Koppeleinrichtungsaktuator 86A in jene Stellung vor, bei der der Elektromotor 54A mit der Antriebswelle der Pumpe 38 verbunden ist, also in jene Stellung, bei der die Pumpen-Koppeleinrichtung 82A geschlossen ist und die Schaltwalzen-Koppeleinrichtung 60A geöffnet ist. Die Hydraulikkreise 36A, 36B der Aktuatoranordnung 30" der Fig. 3 weisen einen gemeinsamen Kreuzschaltungsabschnitt 90 auf. Dieser beinhaltet eine erste Verbindungsleitung 92A, die einen Hydraulikzylinder des hydraulischen Koppeleinrichtungsaktuators 86A mit einem Anschluss der Pumpe 38B verbindet. Dies kann der Druckanschluss oder der Sauganschluss sein. Im vorliegenden Fall sind der Druckanschluss und der Sauganschluss der zweiten Pumpe 38B über ein Wechselventil 94B miteinander verbunden, und die Verbindungsleitung 92A verbindet das Wechselventil 94B mit dem Koppeleinrichtungsaktuator 86A. In entsprechender Weise ist der zweite hydraulische Koppeleinrichtungsaktuator 86B für das zweite Koppeleinrichtungspaket 80B über eine Verbindungsleitung 92B des Kreuzschaltungsabschnittes 90 mit einem Anschluss der ersten Pumpe 38A verbunden, entweder mit dem Druckanschluss oder dem Sauganschluss. Im vorliegenden Fall ist die zweite Verbindungsleitung 92B mit einem entsprechenden Wechselventil 94A verbunden, das den Sauganschluss und den Druckanschluss der ersten Pumpe 38A miteinander verbindet.

Demzufolge kann beispielsweise das Koppeleinrichtungspaket 80A in die Stellung gebracht werden, bei der die Pumpen-Koppeleinrichtung 82A geöffnet und die Schaltwalzen-Koppeleinrichtung 60A geschlossen sind, indem die zweite Pumpe 38B in umgekehrter Drehrichtung betrieben wird, so dass Fluid über den Druckanschluss 46B angesaugt und über den Sauganschluss und das Wechselventil 94B in die erste Verbindungsleitung 92A geführt wird. Diese alternative Betätigungsart wird gewählt, wenn die zweite Reibkupplung 24 geöffnet ist. Wenn hingegen die zweite Reibkupplung 24 geschlossen ist, ist der Druck in dem Druckanschluss der zweiten Pumpe 38B größer als jener in dem zugeordneten Sauganschluss, so dass das Wechselventil 94B umschaltet. In diesem Fall ist der Druckanschluss 46B der zweiten Pumpe 38B über die erste Verbindungsleitung 92A mit dem ersten Koppeleinrichtungsaktuator 86A verbunden. Um eine unbeabsichtigte Betätigung des Koppeleinrichtungsaktuators 86A zu verhindern, ist die Rückstellfeder 88A so ausgelegt, dass sie bei normalem Schließen der zweiten Reibkupplung 24 und einem entsprechenden Druck in dem zweiten Druckanschluss 46B nicht ausgelenkt wird, der erste Koppeleinrichtungsaktuator 86A also nicht betätigt wird. Allerdings kann der Druck in dem Druckanschluss 46B durch Erhöhen der Drehzahl des zweiten Elektromotors 54B erhöht werden, so dass die zweite Reibkupplung überdrückt wird. Der hierdurch eingerichtete Druck ist hinreichend, um den ersten Koppeleinrichtungsaktuator 86A gegen die Kraft der Feder 88A auszulenken und folglich die erste Pumpen-Koppeleinrichtung 82A zu öffnen und die erste Schaltwalzen-Koppeleinrichtung 60A zu schließen, so dass ab diesem Zeitpunkt die Schaltwalze 56A mittels des Elektromotors 54A verdreht werden kann. In entsprechender Weise kann die zweite Schaltwalze 56B betätigt werden, wenn die erste Pumpe 38A in entgegengesetzter Drehrichtung betrieben wird oder am ersten Druckanschluss 46A ein Druck erzeugt wird, der die erste Reibkupplung 20 überdrückt und den zweiten Koppeleinrichtungsaktuator 86B gegen die Kraft der Feder 88B auslenkt.

In Fig. 4 ist eine weitere Ausführungsform einer Aktuatoranordnung 30'" gezeigt, die hinsichtlich Aufbau und Funktionsweise generell der Aktuatoranordnung 30" der Fig. 3 entspricht. Gleiche Elemente sind daher durch gleiche Bezugszeichen gekennzeichnet. Im Folgenden werden im Wesentlichen die Unterschiede erläutert.

Bei der Aktuatoranordnung 30"' ist, ähnlich wie bei der Aktuatoranordnung 30 der Fig. 1, keine Pumpen-Koppeleinrichtung 82 vorgesehen, sondern eine Ausgangswelle des Elektromotors 54A ist starr mit einer Antriebswelle der zugeordneten Pumpe 38A verbunden. Gleiches gilt für den zweiten Aktuatorabschnitt. Demzufolge ist zwischen den Druckanschlüssen und den Sauganschlüssen der Pumpen 38 ein Druckabbauventil 66' vorgesehen. Die Druckabbauventile 66A', 66B' der Aktuatoranordnung 30'" der Fig. 4 werden jedoch nicht elektromagnetisch betätigt, sondern hydraulisch. Hierzu ist das erste Druckabbauventil 66A' mit der ersten Verbindungsleitung 92A verbunden, und das zweite Druckabbauventil 66B' ist mit der zweiten Verbindungsleitung 92B verbunden. Demzufolge erfolgt das Schließen der Schaltwalzen-Koppeleinrichtungen 60A, 60B jeweils synchron mit dem Versetzen der Druckabbauventile 66A', 66B' in die jeweilige Schaltstellung, bei der die Anschlüsse der Pumpen mit dem Niederdruckabschnitt verbunden sind.

Schließlich zeigt Fig. 5 eine alternative Ausführungsform einer Schaltwalze 56A', in die koaxial eine Schaltwalzen-Koppeleinrichtung 60A' integriert ist, die direkt oder über eine Übersetzungsstufe 58A mit der Ausgangswelle 78A des Elektromotors verbunden werden kann. Die in die Schaltwalze 56A' integrierte Schaltwalzen-Koppeleinrichtung 60A' kann dabei dem Grunde nach aufgebaut sein, wie es oben in Bezug auf die Fig. 1 oder 4 erläutert worden ist. Optional kann eine Pumpen-Koppeleinrichtung 82 zwischen der Ausgangswelle 78A des Elektromotors und der Antriebswelle der zugeordneten Pumpe angeordnet sein, was in Fig. 5 jedoch nicht dargestellt ist.

## Patentansprüche

1. Aktuatoranordnung (30) für einen Kraftfahrzeugantriebsstrang (10), der wenigstens eine Reibkupplung (20, 24) zur Übertragung von Antriebsmoment, insbesondere in Form einer Anfahrkupplung, sowie ein Getriebe (22, 26) mit wenigstens zwei Gangstufen (1, 2, ...) aufweist, die mittels einer Schaltkupplungsanordnung (23, 25) ein- und auslegbar sind, mit einem Hydraulikkreis (36), der eine Pumpe (38) aufweist, die mittels eines Elektromotors (54) antreibbar ist, und der einen Kupplungs-Hydraulikzylinder (48) aufweist, mittels dessen die Reibkupplung (20, 24) betätigbar ist, und mit einer Schalt-Aktuatoreinrichtung (55) zum Betätigen der Schaltkupplungsanordnung (23, 25), wobei die Schalt-Aktuatoreinrichtung (55) eine Schaltwalze (56) aufweist, die mit dem Elektromotor (54) über eine Schaltwalzen-Koppeleinrichtung (60) derart gekoppelt oder koppelbar ist, dass die Schaltwalze (56) mittels des Elektromotors (54) in Rotation versetzbar ist, um die Schaltkupplungsanordnung (23, 25) zu betätigen,
**dadurch gekennzeichnet, dass**
der Kraftfahrzeugantriebsstrang (10) ein Doppelkupplungsgetriebe (14) mit einer ersten Reibkupplung (20) und mit einer zweiten Reibkupplung (24) aufweist, wobei der Hydraulikkreis (30) eine von einem ersten Elektromotor (54A) antreibbare erste Pumpe (38A) für die erste Reibkupplung (20) und eine von einem zweiten Elektromotor (54B) antreibbare zweite Pumpe (38B) für die zweite Reibkupplung (24) aufweist, wobei die Schalt-Aktuatoreinrichtung (55) eine erste Schaltwalze (56A) und eine zweite Schaltwalze (56B) aufweist, wobei die erste Schaltwalze (56A) über eine erste Schaltwalzen-Koppeleinrichtung (60A) mit dem ersten Elektromotor (54A) koppelbar ist und wobei die zweite Schaltwalze (56B) über eine zweite Schaltwalzen-Koppeleinrichtung (60B) mit dem zweiten Elektromotor (54B) koppelbar ist, wobei der Hydraulikkreis (30) einen Kreuzschaltungsabschnitt (90) aufweist, der zumindest einen Anschluss (46B, 40B) der zweiten Pumpe (38B) mit einem hydraulischen ersten Koppeleinrichtungsaktuator (86A) zum Betätigen der ersten Schaltwalzen-Koppeleinrichtung (60A) verbinden kann, und/oder der zumindest einen Anschluss (46A, 40A) der ersten Pumpe (38A) mit einem hydraulischen zweiten Koppeleinrichtungsaktuator (86B) zum Betätigen der zweiten Schaltwalzen-Koppeleinrichtung (60B) verbinden kann.

2. Aktuatoranordnung nach Anspruch 1, **dadurch gekennzeichnet, dass** die Elektromotoren (54) jeweils starr mit einer Antriebswelle (52) der jeweiligen Pumpe (38) gekoppelt sind.

3. Aktuatoranordnung nach Anspruch 2, **dadurch gekennzeichnet, dass** der Hydraulikkreis (36) für jede Pumpe ein Druckabbauventil (66) aufweist, das in einer Ventilstellung wenigstens einen Druckanschluss (46A) der jeweiligen Pumpe (38) mit einem Niederdruckabschnitt (44) verbindet.

4. Aktuatoranordnung nach Anspruch 1, **dadurch gekennzeichnet, dass** die Elektromotoren (54) jeweils über eine Pumpen-Koppeleinrichtung (82) mit einer Antriebswelle (52) der jeweiligen Pumpe (38) gekoppelt ist.

5. Aktuatoranordnung nach Anspruch 4, **dadurch gekennzeichnet, dass** die Schaltwalzen-Koppeleinrichtung (60) und die Pumpen-Koppeleinrichtung (82) jeweils in ein Koppeleinrichtungspaket (80) integriert sind.

6. Aktuatoranordnung nach einem der Ansprüche 1 bis 5, **dadurch gekennzeichnet, dass** die Schaltwalzen-Koppeleinrichtung (60) und/oder eine Pumpen-Koppeleinrichtung (82) jeweils mittels eines hydraulischen Koppeleinrichtungsaktuators (86) betätigbar ist.

7. Aktuatoranordnung nach Anspruch 6, **dadurch gekennzeichnet, dass** der jeweilige hydraulische Koppeleinrichtungsaktuator (86) mit einem Sauganschluss (40) einer jeweiligen Pumpe (38) verbunden ist, derart, dass der Koppeleinrichtungsaktuator (86) bei Drehrichtungsumkehr der Pumpe (38) mit Fluid versorgt wird.

8. Aktuatoranordnung nach einem der Ansprüche 1 bis 7, **dadurch gekennzeichnet, dass** die Schaltwalzen-Koppeleinrichtung (60) wenigstens eine Übersetzungsstufe (58) aufweist.

9. Aktuatoranordnung nach einem der Ansprüche 1 bis 8, **dadurch gekennzeichnet, dass** die Schaltwalzen-Koppeleinrichtung (60A') in die Schaltwalze (56A') integriert ist.

10. Aktuatoranordnung nach einem der Ansprüche 1 bis 9, **dadurch gekennzeichnet, dass** die Pumpen (38) jeweils einen Druckanschluss (46) aufweisen, der direkt mit dem jeweiligen Kupplungs-Hydraulikzylinder (48) verbunden ist.

11. Aktuatoranordnung nach einem der Ansprüche 1 bis 10, **dadurch gekennzeichnet, dass** der Kreuzschaltungsabschnitt (90) ein erstes Wechselventil (94A) aufweist, das einen Druckanschluss und einen Sauganschluss der ersten Pumpe (38A) miteinander verbindet, und ein zweites Wechselventil (94B) aufweist, das einen Druckanschluss und einen Sauganschluss der zweiten Pumpe (38B) miteinander verbindet.

12. Aktuatoranordnung nach Anspruch 11, **dadurch gekennzeichnet, dass** die Wechselventile (94A, 94B) den jeweiligen Druckanschluss oder Sauganschluss jeweils mit einer Verbindungsleitung (92A, 92B) verbinden, die mit dem jeweiligen Koppeleinrichtungsaktuator (86B, 86A) verbunden ist.

13. Aktuatoranordnung nach Anspruch 12, **dadurch gekennzeichnet, dass** die Verbindungsleitungen (92A, 92B) jeweils mit einem Druckabbauventil (66B, 66A) verbunden sind, das den Druckanschluss und den Sauganschluss der dem Koppeleinrichtungsaktuator (86B, 86A) zugeordneten Pumpe (38A, 38B) miteinander verbindet, wobei die Druckabbauventile (66B, 66A) in einer Ventilstellung den Druckanschluss und den Sauganschluss mit einem Niederdruckabschnitt (44) verbinden.

14. Kraftfahrzeugantriebsstrang (10) mit einer Aktuatoranordnung (30) nach einem der Ansprüche 1 bis 13.

## Claims

1. An actuator arrangement (30) for a motor vehicle drive train (10) which comprises at least one friction clutch (20, 24) for transmission of drive torque, in particular in the form of a starting clutch, and a gear mechanism (22, 26) with at least two gears (1, 2, ...) which can be engaged and disengaged by means of a shift clutch arrangement (23, 25), the actuator arrangement comprising a hydraulic circuit (36) which has a pump (38) which can be driven by means of an electric motor (54) and has a clutch hydraulic cylinder (48), by means of which the friction clutch (20, 24) can be actuated, and comprising a shift actuator device (55) for activating the shift clutch arrangement (23, 25), wherein the shift actuator device (55) has a shift drum (56) which is coupled or can be coupled to the electric motor (54) via a shift drum coupling device (60), so that the shift drum (56) can be set in rotation by means of the electric motor (54) in order to actuate the shift clutch arrangement (23, 25),
**characterized in that**
the motor vehicle drive train (10) has a double clutch gear mechanism (14) with a first friction clutch (20) and with a second friction clutch (24), wherein the hydraulic circuit (30) has, for the first friction clutch (20), a first pump (38A) which can be driven by a first electric motor (54A), and has, for the second friction clutch (24), a second pump (38B) which can be driven by a second electric motor (54B), wherein the shift actuator device (55) has a first shift drum (56A) and a second shift drum (56B), wherein the first shift drum (56A) can be coupled to the first electric motor (54A) via a first shift drum coupling device (60A), and wherein the second shift drum (56B) can be coupled to the second electric motor (54B) via a second shift drum coupling device (60B), wherein the hydraulic circuit (30) has a cross-circuit portion (90) which can connect at least one port (46B, 40B) of the second pump (38B) to a hydraulic first coupling device actuator (86A) for actuating the first shift drum coupling device (60A), and/or which can connect at least one port (46A, 40A) of the first pump (38A) to a hydraulic second coupling device actuator (86B) for actuating the second shift drum coupling device (60B).

2. The actuator arrangement as claimed in claim 1, **characterized in that** the electric motors (54) are rigidly coupled to a drive shaft (52) of the respective pump (38).

3. The actuator arrangement as claimed in claim 2, **characterized in that** the hydraulic circuit (36) has for each pump a pressure-reduction valve (66) which, in one valve position, connects at least one pressure port (46A) of the respective pump (38) to a low-pressure portion (44).

4. The actuator arrangement as claimed in claim 1, **characterized in that** the electric motors (54) are coupled in each case to a drive shaft (52) of the respective pump (38) via a pump coupling device (82).

5. The actuator arrangement as claimed in claim 4, **characterized in that** the shift drum coupling device (60) and the pump coupling device (82) are in each case integrated in a coupling device packet (80).

6. The actuator arrangement as claimed in any of claims 1 to 5, **characterized in that** the shift drum coupling device (60) and/or a pump coupling device (82) can be actuated in each case by means of a hydraulic coupling device actuator (86).

7. The actuator arrangement as claimed in claim 6, **characterized in that** the respective hydraulic coupling device actuator (86) is connected to a suction port (40) of a respective pump (38) such that the coupling device actuator (86) is supplied with fluid when the pump (38) reverses its direction of rotation.

8. The actuator arrangement as claimed in any of claims 1 to 7, **characterized in that** the shift drum coupling device (60) has at least one transmission ratio stage (58).

9. The actuator arrangement as claimed in any of claims 1 to 8, **characterized in that** the shift drum coupling device (60A') is integrated in the shift drum (56A').

10. The actuator arrangement as claimed in any of claims 1 to 9, **characterized in that** the pumps (38) in each case have a pressure port (46) which is directly connected to the respective clutch hydraulic cylinder (48).

11. The actuator arrangement as claimed in any of claims 1 to 10, **characterized in that** the cross-circuit portion (90) comprises a first change-over valve (94A) which connects a pressure port and a suction port of the first pump (38A) with each other, and comprises a second change-over valve (94B) which connects a pressure port and a suction port of the second pump (38B) with each other.

12. The actuator arrangement as claimed in claim 11, **characterized in that** the change-over valve (94A, 94B) connect the respective pressure port or suction port in each case with a connection line (92A, 92B) which is connected to the respective coupling device actuator (86B, 86A).

13. The actuator arrangement as claimed in claim 12, **characterized in that** the connection lines (92A, 92B) are in each case connected with a pressure-reduction valve (66B, 66A) which connects the pressure port and the suction port of a pump (38A, 38B) with each other, which pump is assigned to the coupling device actuator (86B, 86A), wherein the pressure-reduction valves (66B, 66A), in one valve position, connect the pressure port and the suction port with a low-pressure portion (44).

14. A motor vehicle drive train (10) with an actuator arrangement (30) as claimed in any of claims 1 to 13.

## Revendications

1. Agencement d'actionneur (30) pour une chaîne cinématique de véhicule automobile (10), qui présente au moins un embrayage à friction (20, 24) pour transmettre un couple d'entraînement, en particulier sous la forme d'un embrayage de démarrage, ainsi qu'une transmission (22, 26) comprenant au moins deux rapports de transmission (1, 2,...), qui peuvent être enclenchés et désenclenchés au moyen d'un agencement d'embrayage de changement de rapports (23, 25), avec un circuit hydraulique (36) qui présente une pompe (38) qui peut être entraînée au moyen d'un moteur électrique (54), et qui présente un cylindre hydraulique d'embrayage (48) au moyen duquel l'embrayage à friction (20, 24) peut être actionné, et avec un dispositif d'actionneur de changement de rapports (55) pour actionner l'agencement d'embrayage de changement de rapports (23, 25), le dispositif d'actionneur de changement de rapports (55) présentant un tambour de sélection (56) qui est ou peut être accouplé au moteur électrique (54) par le biais d'un dispositif d'accouplement de tambour de sélection (60) de telle sorte que le tambour de sélection (56) puisse être entraîné en rotation au moyen du moteur électrique (54) afin d'actionner l'agencement d'embrayage de changement de rapports (23, 25),
**caractérisé en ce que**
la chaîne cinématique de véhicule automobile (10) présente une transmission à double embrayage (14) avec un premier embrayage à friction (20) et un deuxième embrayage à friction (24), le circuit hydraulique (30) présentant une première pompe (38A) pouvant être entraînée par un premier moteur électrique (54A) pour le premier embrayage à friction (20) et une deuxième pompe (38B) pouvant être entraînée par un deuxième moteur électrique (54B) pour le deuxième embrayage à friction (24), le dispositif d'actionneur de changement de rapports (55) présentant un premier tambour de sélection (56A) et un deuxième tambour de sélection (56B), le premier tambour de sélection (56A) pouvant être accouplé par le biais d'un premier dispositif d'accouplement de tambour de sélection (60A) au premier moteur électrique (54A) et le deuxième tambour de sélection (56B) pouvant être accouplé par le biais d'un deuxième dispositif d'accouplement de tambour de sélection (60B) au deuxième moteur électrique (54B), le circuit hydraulique (30) présentant une portion à liaison en croix (90) qui peut relier au moins un raccord (46B, 40B) de la deuxième pompe (38B) à un actionneur hydraulique de premier dispositif d'accouplement (86A) pour l'actionnement du premier dispositif d'accouplement de tambour de sélection (60A), et/ou qui peut relier au moins un raccord (46A, 40A) de la première pompe (38A) à un actionneur hydraulique de deuxième dispositif d'accouplement (86B) pour l'actionnement du deuxième dispositif d'accouplement de tambour de sélection (60B).

2. Agencement d'actionneur selon la revendication 1, **caractérisé en ce que** les moteurs électriques (54) sont à chaque fois accouplés rigidement à un arbre d'entraînement (52) de la pompe respective (38).

3. Agencement d'actionneur selon la revendication 2, **caractérisé en ce que** le circuit hydraulique (36) pour chaque pompe présente une soupape de réduction de pression (66) qui, dans une position de la soupape, relie au moins un raccord de pression (46A) de la pompe respective (38) à une portion basse pression (44).

4. Agencement d'actionneur selon la revendication 1, **caractérisé en ce que** les moteurs électriques (54) sont à chaque fois accouplés par le biais d'un dispositif d'accouplement de pompe (82) à un arbre d'entraînement (52) de la pompe respective (38).

5. Agencement d'actionneur selon la revendication 4, **caractérisé en ce que** le dispositif d'accouplement de tambour de sélection (60) et le dispositif d'accouplement de pompe (82) sont à chaque fois intégrés dans un paquet de dispositif d'accouplement (80).

6. Agencement d'actionneur selon l'une quelconque des revendications 1 à 5, **caractérisé en ce que** le dispositif d'accouplement de tambour de sélection (60) et/ou un dispositif d'accouplement de pompe (82) peuvent à chaque fois être actionnés au moyen d'un actionneur hydraulique de dispositif d'accouplement (86).

7. Agencement d'actionneur selon la revendication 6, **caractérisé en ce que** l'actionneur hydraulique de dispositif d'accouplement respectif (86) est relié à un raccord d'aspiration (40) d'une pompe respective (38), de telle sorte que l'actionneur de dispositif d'accouplement (86) soit alimenté en fluide lors de l'inversion du sens de rotation de la pompe (38).

8. Agencement d'actionneur selon l'une quelconque des revendications 1 à 7, **caractérisé en ce que** le dispositif d'accouplement de tambour de sélection (60) présente au moins un étage de démultiplication (58).

9. Agencement d'actionneur selon l'une quelconque des revendications 1 à 8, **caractérisé en ce que** le dispositif d'accouplement de tambour de sélection (60A') est intégré dans le tambour de sélection (56A').

10. Agencement d'actionneur selon l'une quelconque des revendications 1 à 9, **caractérisé en ce que** les pompes (38) présentent à chaque fois un raccord de pression (46) qui est relié directement au cylindre hydraulique d'embrayage respectif (48).

11. Agencement d'actionneur selon l'une quelconque des revendications 1 à 10, **caractérisé en ce que** la portion à liaison en croix (90) présente une première soupape d'échange (94A) qui relie l'un à l'autre un raccord de pression et un raccord d'aspiration de la première pompe (38A), et présente une deuxième soupape d'échange (94B) qui relie l'un à l'autre un raccord de pression et un raccord d'aspiration de la deuxième pompe (38B).

12. Agencement d'actionneur selon la revendication 11, **caractérisé en ce que** les soupapes d'échange (94A, 94B) relient le raccord de pression ou le raccord d'aspiration respectif à chaque fois à une conduite de liaison (92A, 92B), qui est reliée à l'actionneur de dispositif d'accouplement respectif (86B, 86A).

13. Agencement d'actionneur selon la revendication 12, **caractérisé en ce que** les conduites de liaison (92A, 92B) sont reliées à chaque fois à une soupape de réduction de pression (66B, 66A) qui relient l'un à l'autre le raccord de pression et le raccord d'aspiration de la pompe (38A, 38B) associée à l'actionneur de dispositif d'accouplement (86B, 86A), les soupapes de réduction de pression (66B, 66A), dans une position de la soupape, reliant le raccord de pression et le raccord d'aspiration à une portion basse pression (44).

14. Chaîne cinématique de véhicule automobile (10) comprenant un agencement d'actionneur (30) selon l'une quelconque des revendications 1 à 13.
